# EUROPEAN PATENT SPECIFICATION

(11) **EP 1 749 685 B1**
(45) Date of publication and mention of the grant of the patent: **26.11.2008**
(21) Application number: 05735160.3
(22) Date of filing: 21.04.2005
(51) Int. Cl.: B60K 6/12, F01B 5/00

(54) **MECHANISM FOR THE RECOVERY OF ENERGY IN SELF-PROPELLED VEHICLES**
MECHANISMUS ZUR ENERGIERÜCKGEWINNUNG BEI SELBSTFAHRENDEN FAHRZEUGEN
MECANISME RECUPERATEUR D'ENERGIE DANS DES VEHICULES AUTOPROPULSES

(30) Priority: 29.04.2004 ES 200401020; 03.08.2004 ES 200401927
(43) Date of publication of application: 07.02.2007
(73) Proprietor: Ruiz Martinez, Francisco Javier, 07193 Pamanyola, Baleares (ES)
(72) Inventor: Ruiz Martinez, Francisco Javier, 07193 Pamanyola, Baleares (ES)
(74) Representative: Urizar Anasagasti, Jesus Maria
(86) International application number: PCT/ES2005/070048
(87) International publication number: WO 2005/105503

(56) References cited:
- ES-A1- 8 502 923
- ES-A2- 2 065 801
- FR-A- 1 376 714
- JP-A- 56 108 312

## Description

### Object of the Invention

The object of the present specification is to set forth a novel system for the recovery of energy in self-propelled vehicles by means of a balanced rotary compressor with tangential pistons comprising two or more cylinders which are connected to a crank having two or more pins or a rotary compressor with tangential pistons, compromising an extendible crank. This novel system enables the recovery of wasted energy in motor vehicles in the form of pneumatic pressure for the possible use thereof in auxiliary systems belonging to the vehicle or in the engine.

### Background of the Invention

Most of the energy currently produced by the engines in self-propelled vehicles is consumed in deceleration, especially in large cities, causing additional consumptions, as well as the necessary continuous braking systems.

In addition to the drawback set forth, the main defect of rotary compressors with tangential pistons proposed to date is that the elements with internal shifting during the rotation of the assembly are not balanced, and their use at certain revolutions causes mechanical vibrations limiting their use and reducing the useful life thereof.

*Spanish* ES-A-2065801 *belonging to the same proprietor as the present invention is also known in which even though the operating concept is the same, differences improving and optimizing operation are introduced*:
*1. The block is restructured, dividing it into several compartments isolated from one another, with a central chamber where the crank and the grooved inner arms of the pivoted levers are housed, and a chamber for the rear part of each cylinder, where the outer arm of the pivoted lever, the crank and the rear part of the piston are housed. This distribution enables*:
   - *Lubrication of the assembly. The lubricant used accumulates in the central chamber, allowing the controlled passage thereof to the outer chambers driven by centrifugal force, after lubricating the vital elements the lubricant is collected by a pump which injects it again into the central chamber, creating a circuit allowing the lubrication of all the moving parts and the cooling of the lubricant as it passes through the outer part*.
   - *By converting the rear part of the cylinder into a sealed chamber, the shifting of the piston inside the cylinder creates a depression-overpressure in this part, so if this chamber is communicated with the outside by means of a check valve, it will fill with fresh air when the depression is created; if it is internally communicated with the intake valve to the cylinder, this air will be injected into the cylinder when the piston retreats. This arrangement prevents the resistances to the movement of the piston caused by the depression-overpressure, cools this part of the compressor and improves performance*.
*2. In the single-pin compressor during the rotation of the block, the shift of the inner mechanisms is not symmetrical and can cause vibrations; therefore a crank with several pins is proposed, such that a pivoted lever is coupled in each of them, which lever actuates the piston of a specific cylinder according to the arrangement explained in the patent; this allows perfect dynamic balancing of the assembly without the need for any additional element, improving the stability and allowing the increase of maximum revolutions without vibrations and therefore improved performance*.
*3. A compressor is proposed with an extendible pin crank actuated by a fluid under pressure. If it is assumed that the block rotates and the crank remains fixed to the structure or support, when the pin is retracted the assembly rotates on the crank without causing any movement of the inner mechanisms and the compressor behaves like a wheel attached to the drive shaft, when the pin is extended it causes the inner mechanisms to shift and the compressor begins to generate air under pressure. It can thus be used to recover energy while braking, assisting the brakes, to adsorb energy in descents, etc*.

The applicant, who is a person skilled in the art, is not aware of a balanced rotary compressor having the features of the compressor described below.

### Description of the Invention

This novel mechanism for the recovery of energy in self-propelled vehicles, based on either a balanced rotary compressor with tangential pistons comprising two or more cylinders and a crank having two or more pins, or a rotary compressor with tangential pistons comprising an extendible crank, is set forth to palliate, or where applicable, eliminate the drawbacks discussed above.

In the balanced compressor with tangential pistons, the block rotates connected to the drive shaft through a clutch which is actuated upon applying the brake of the vehicle and the crank remains fixed to the structure or support. When the rotation starts, the grooved inner arm of the pivoted lever slides on the pin of the crank and makes it tilt on a shaft, this angular movement is transmitted to the outer arm of the lever, which by means of a connecting rod converts it into an alternative linear path to the piston of its cylinder. Therefore, each rotation of the block causes a complete cycle of the piston.

The pistons of the cylinders are diametrically opposite and are actuated by pins of the shaft that are equally shifted 180°. In this way, the elements with inner shifting, such as pistons, connecting rods and pivoted levers, maintain at all times a 180° shift with its pair, achieving a homogeneous distribution of masses and balancing the assembly.

This homogeneous and balanced distribution is also valid for compressors with an odd number of cylinders, although in this case the balancing is in its assembly, in this way, the pistons of each cylinder are operated by pins angularly shifted the same number of degrees as the cylinders (for example, in the cylinders located at 120° to each other, their pistons are actuated by pins also located at 120° to each other) therefore they maintain a uniform distribution of masses during the rotation, with a constant balancing.

The crank and the inner part of the pivoted lever are located in a sealed central chamber and the outer part of this lever with the connecting rod and the piston in the other, separated by the rotating shaft of this pivoted lever.

The necessary elements completing the compressor, the cylinder head and the cover of the check valves, inlet and outlet ducts, are located in the upper part of the cylinder. The compressed air outlet is sent to a suitable container through the front shaft of the compressor and a rotary joint.

The rotation of the block also favors the dissipation of heat generated during the compression and together with the absence of vibrations, makes it especially suitable for the recovery of energy in self-propelled vehicles, connected to the drive shaft thereof by means of a clutch actuated upon applying the brake of the vehicle.

On the other hand, the compressor comprising an extendible crank is formed by a block with two or more cylinders and a crank with a single extendible pin, to which the pistons are coupled by means of a pivoted lever and a connecting rod for each cylinder, the block rotates connected to the drive shaft of the vehicle and the crank remains fixed joined to the structure of the vehicle. The crank is formed by a cylinder joined to the fixing shaft and a rod with the pin, the shaft and the cylinder have an inner duct through which air or liquid flows under pressure, actuating the rod by extending it when the brake of the vehicle is applied.

### Description of the Drawings

To complement the description being made and for the purpose of aiding to better understand the features of the invention a series of drawings is attached to the present specification as an integral part thereof in which the following has been shown with an illustrative and non-limiting character:
Figure 1 shows a plan view of the mechanism for the recovery of energy in self-propelled vehicles based on a balanced rotary compressor with tangential pistons comprising two cylinders.
Figure 2 shows a plan view of the mechanism for the recovery of energy in self-propelled vehicles with a balanced rotary compressor with tangential pistons comprising three cylinders.

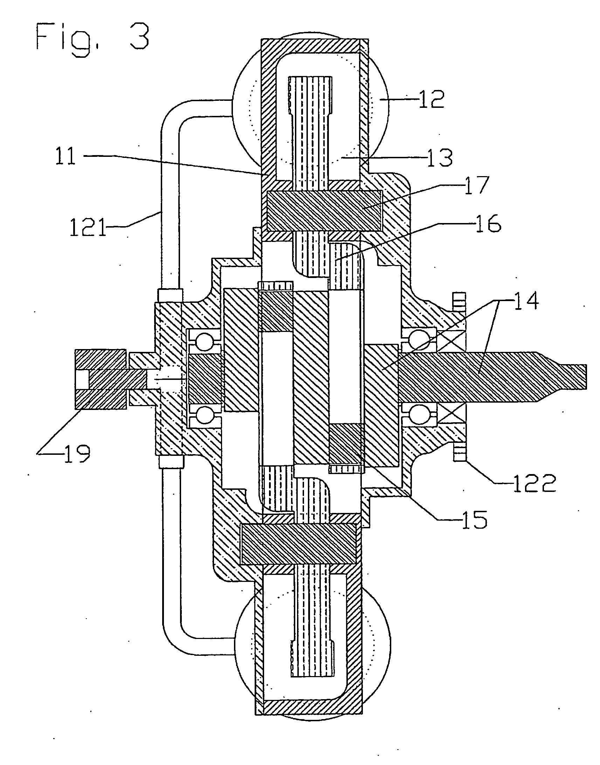

Figure 3 shows a section of the mechanism for the recovery of energy in self-propelled vehicles with a balanced rotary compressor.
Figure 4 shows a plan view of a mechanism for the recovery of energy in self-propelled vehicles with a rotary compressor comprising an extendible crank with three cylinders.
Figure 5 shows a section of a mechanism for the recovery of energy with a rotary compressor comprising an extendible crank, with the same objective as the previous one.
Figure 6 shows a plan view of a mechanism for the recovery of energy in self-propelled vehicles with a rotary compressor comprising an extendible crank, with two positions: "A" extended crank; and "B" retracted crank.
Figure 7 shows a scheme for the actuation of the valve controlling the extension of the crank and a view thereof.
Figure 8 shows a balanced rotary compressor, with the intake of air from the rear chamber of the cylinder through a check valve.

### Preferred Embodiment of the Invention

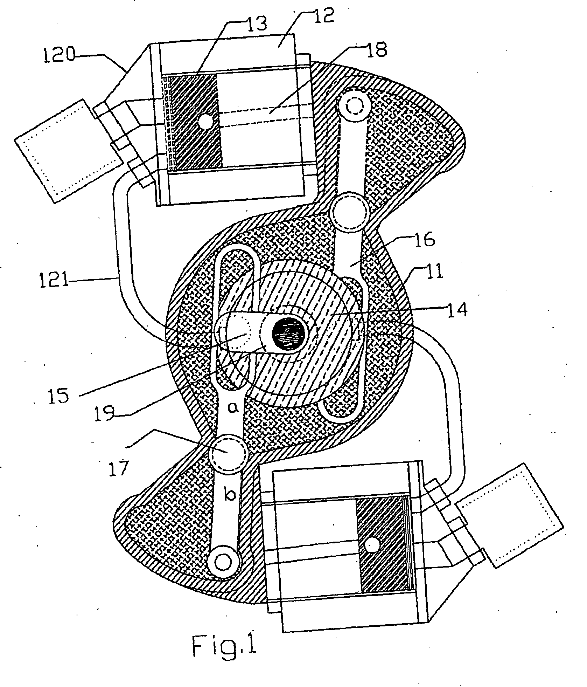

As can be seen in Figure 1, the mechanism for the recovery of energy in self-propelled vehicles, object of the present invention, is formed by, in the case of Figure 1, a balanced rotary compressor with tangential pistons which is in turn formed by a block (11) with two cylinders (12) and a crank (14) with two pins (15). The assembly rotates when the brake, connected to the drive shaft by means of a clutch, is applied and the crank (14) remains fixed to the structure or support. When the rotation is started, the inner arm "a" of the pivoted lever (16) slides on the pin (15) of the crank (14), which remains fixed, and makes it tilt on its shaft (17), this angular movement is transmitted to the piston (13) in an alternative linear path by means of the outer arm "b" and the connecting rod (18). In this way, each rotation of the block causes a complete cycle of the piston.

The pistons (13) of the cylinders (12) that are diametrically opposite are actuated by pins (15) of the crank (14) that are equally shifted 180°. In this way, the elements having an inner shifting, such as pistons (13), connecting rods (18) and pivoted levers, maintain at all times a 180° shift with their pair, achieving a homogeneous distribution of masses and balancing the assembly.

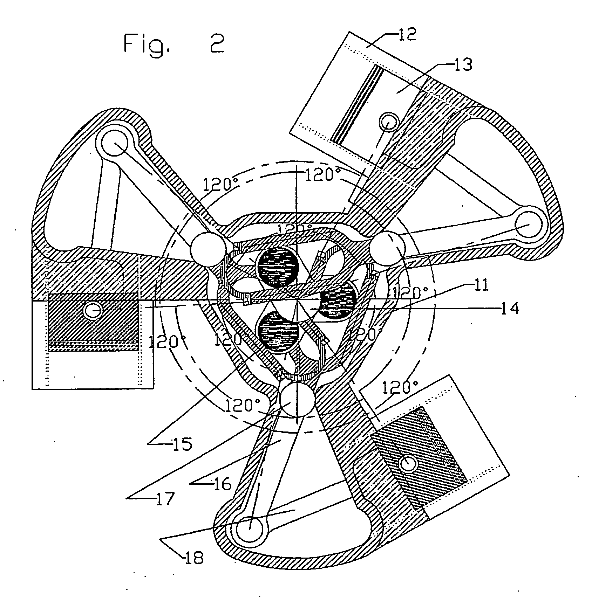

As can be observed in Figure 2, this homogeneous and balanced distribution of masses is also valid for an odd number of cylinders, although in this case the balancing is as a group and not by pairs. The cylinders (12) are located at 120° to each other and their pistons (13) are actuated by pistons (15) that are also located at 120°, therefore they maintain a uniform distribution of their masses during the rotation with a constant balancing.

The necessary elements completing the balanced rotary compressor, the cylinder head (120), the cover of the check valves, the air inlet and outlet ducts, are located in the upper part of the cylinder (12). The compressed air outlet (121) is sent to a suitable container through the front shaft of the compressor and a rotary joint (19).

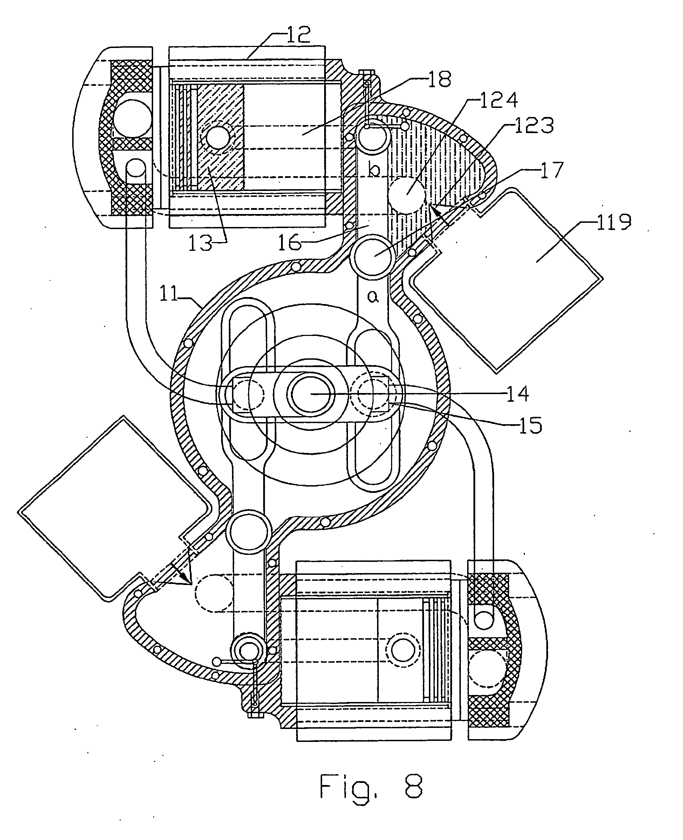

Figure 8 shows a variant of the compressor used in this first embodiment of the mechanism for the recovery of energy in self-propelled vehicles, where the crank (14) and the lower part (a) of the pivoted lever (16) are located in a sealed central chamber and the outer part (b) of this lever (16), with the connecting rod (18) and the piston (13) in another chamber, separated by the rotating shaft (17) of this pivoted lever (16). This arrangement facilitates the individual lubrication of each chamber, and allows the air to be drawn from the rear chamber of the cylinder (12), through a check valve (123) during the forward run of the piston (13), and injected during the return through the duct (124), to the compression chamber.

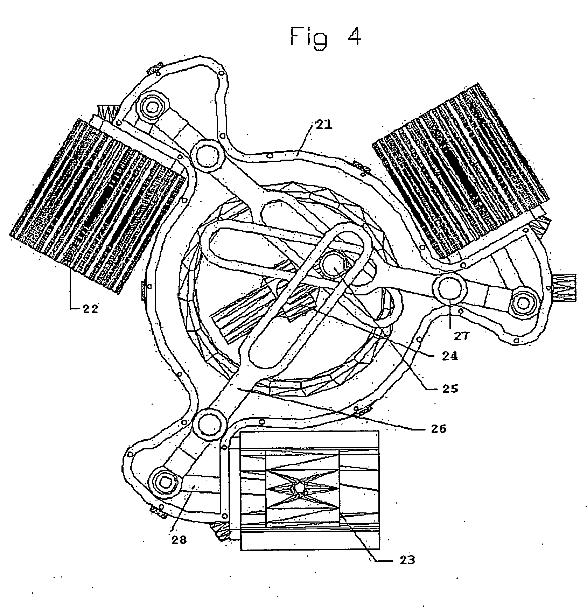

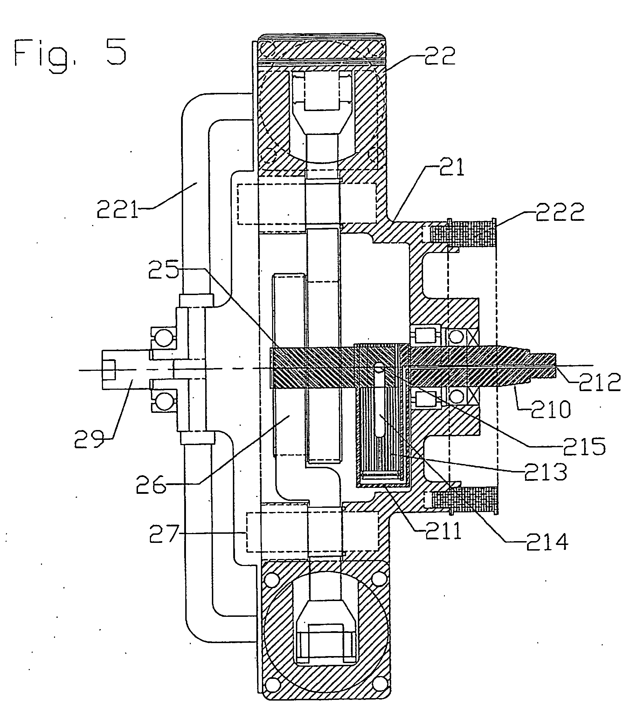

The mechanism for the recovery of energy in self-propelled vehicles based on the compressor comprising an extendible crank (Figures 4, 5, 6 and 7) basically consists of: block (21), cylinders (22), pistons (23), pivoted lever (26), connecting rods (28), and a crank (24) having a single pin (25), which moves, radially driven by pneumatic or hydraulic pressure. The block (21) rotates joined to the drive shaft of the vehicle, either by gears, belts or other means (222) and with it, all its elements (cylinders, pistons, connecting rods and pivoted lever) and the crank remains fixed to the structure of the vehicle. The crank (24) consist of a shaft (210) joined to a cylinder (211) and both of them have a hole (212) through which the driving agent flows to the base of the latter, a rod (213) joined to the pin (25) slides inside the cylinder.

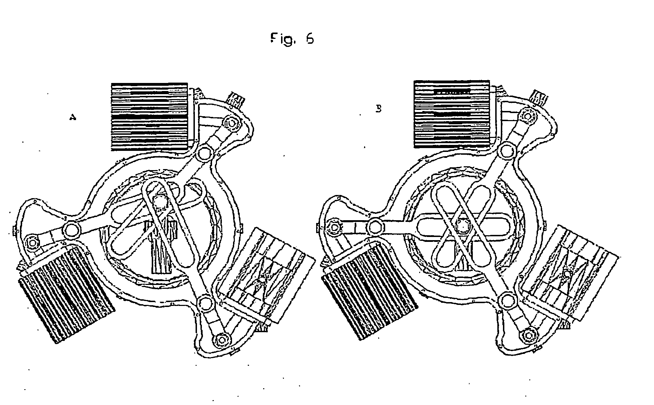

As can be observed in Figure 6A, when the crank (24) of the compressor is extended, the rotation of the block (21) with all the elements causes an angular shifting in the inner arm of the pivoted lever (26), since the crank (24) is fixed to the structure of the vehicle, this movement is transmitted by the outer arm of the pivoted lever (26) to the piston (23) in the form of an alternative linear movement. In figure 6B, where the crank (24) of the compressor is retracted, the block (21) continues to rotate connected to the drive shaft of the vehicle, but the pivoted lever (26) and the pistons (23) do not move. The compressed air outlet (221) sends the air to a suitable container through the front shaft of the compressor and a rotary joint (29).

As has just been mentioned, during the rotation of the block (21), the pistons (23) remain in a neutral position and the rod remains retracted; when the brake is actuated, pressure is sent to the cylinder (22), the rod and the pin (25) extend and the pistons (23) move in an alternative linear path up to their limit, driven by the angular movement caused by the pin (25) and the pivoted lever (26). This extension is limited by the two grooves (214) made in the rod, in which two lugs (215) fixed to the driving cylinder (22) slide and which at the same time maintain the orientation of the pin (25). The position of the rod is determined by a control valve consisting of a piston (216) actuated by the brake and another piston (217) regulating the maximum pressure in the air storage system, a solenoid (218) is also provided which is activated in the event that a minimum pressure is needed in the system, which by means of a pressure switch actuates the system independently of the situation of the brake.

The crank (24) and the inner part of the pivoted arm (26) are located in a sealed central chamber and the outer part of said lever (26), with the connecting rod (28) and the piston (23) in another one, separated by the rotating shaft (27) of this pivoted lever (26). This arrangement facilitates the individual lubrication of each chamber, and allows the air to be drawn from the rear chamber of the cylinder (22), through a check valve during the forward run of the piston (23), and injected during the return through the duct (124) into the compression chamber.

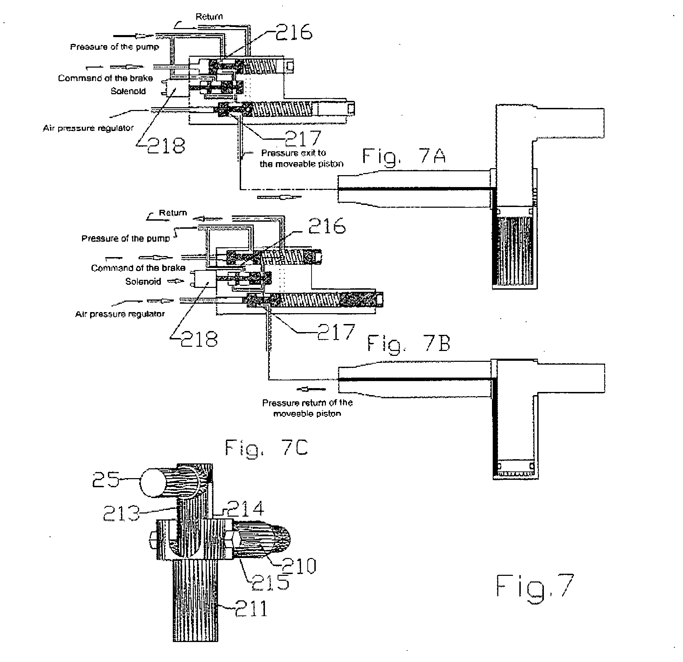

Figure 7 shows the operation of the valve controlling the crank. Thus, in figure 7A, when the brake is applied, pressure is sent to the piston (216) of the valve, which moves, allowing the hydraulic or pneumatic pressure of this system to pass to the cylinder (211) through the piston (217) regulating the air pressure of the storage system, moving the rod (214) to which the pin (25) of the crank (24) is joined up to the its run limit and causing the angular movement of the pivoted crank (26), which moves the pistons (23) linearly. In figure 7B, when the brake is released and as there is no pressure in this system, the piston (216) recovers its position by means of its spring, the pressure of the system is cut off and the duct of the cylinder returned, thus the pressure exerted by the air on the pistons takes the crank to its rest position. The piston (218) which is actuated by a solenoid is provided in case a minimum air pressure is needed to be maintained in the system and can be activated by a pressure switch. Figure 7C shows the extendible crank (24) with a single pin (25) formed by a shaft coupled to the structure of the vehicle (210), a driving cylinder (211), a rod (213), grooves for limiting and orienting the crank (214) and limiting lugs (215).

Having sufficiently described the nature of the present invention as well as a way of carrying it out to practice, it is necessary to state that the intervention may undergo certain variations in shape and in materials provided that said alterations do not change the features which are claimed below.

## Claims

1. A mechanism for the recovery of energy in self-propelled vehicles formed by
- a balanced rotary compressor with tangential pistons (13),
- a block (11) which in tum is formed by two or more cylinders (12), in each of which a piston (13) is shiftable and actuated by a pivoted lever(16),
- each pivoted lever (16) having an inner arm (a) and an outer arm (b) pivoting about a shaft (17),
- each inner arm (a) is provided with a groove in which an eccentric pin (15) of a crank (14) is slidably arranged,
- each outer arm (b) is connected via a connecting rod (18) to the respective piston (13),
- said block (11) is connectable through a clutch to a drive shaft of the vehicle whereby said clutch is actuated when a brake is applied so that said block with all the elements rotates whereas the crank (14) remains stationary fixed to the structure
- so that each eccentric pin (15) slides along the groove of the respective inner arm (a) causing a tilting of the respective pivoted lever (16) on its shaft (17) which angular movement is then transmitted via the respective outer arm (b) and connecting rod (18) to a linear movement of the respective piston (13),
**characterised in that**
- the crank (14) and the inner arms (a) of the pivoted levers (16) are located in a sealed central chamber and
- each outer arm (b) of the pivoted lever (16), and the respective connecting rod (18) and piston (13) are located in another chamber, individually separated by the shaft (17) of the pivoted lever (16), facilitating the individual lubrication of each said another chamber,
- whereby during forward run of the piston (13) air is drawn from the rear part of each cylinder (12) through a check valve (123) and during return run of the piston (13) air is injected through a duct (124) into the compression chamber of the cylinder joining said compression chamber with an air inlet,
- the compressed air is sent from the compression chamber via an air outlet (121) through a shaft of the compressor and a rotary joint (19) so as to be stored in a suitable container.

2. A mechanism for the recovery of energy in self-propelled vehicles according to claim 1, **characterized in that** the piston of each cylinder are operated by pins angularly shifted the same number of degrees as the cylinders, therefore a homogenous distribution of all masses is maintained during the rotation of the assembly, and the block is connected to the drive shaft of the vehicle by means of the clutch when the brake is applied.

## Patentansprüche

1. Mechanismus zur Rückgewinnung von Energie in selbstangetriebenen Fahrzeugen, der aus den folgenden Elementen gebildet wird:
- einem ausbalancierten Rotationsverdichter mit tangentialen Kolben (13),
- ein Block (13), der seinerseits durch zwei oder mehr Zylinder (12) gebildet wird, in denen jeweils ein Kolben (13) verschiebbar ist und durch einen Schwenkhebel (16) angetrieben wird,
- wobei jeder Schwenkhebel (16) einen Innenarm (a) und einen Außenarm (b) hat, die um eine Welle (17) schwenken,
- wobei jeder Innenarm (a) mit einer Nut versehen ist, in der ein exzentrischer Stift (15) einer Kurbel (14) verrutschbar angeordnet ist,
- wobei jeder Außenarm (b) durch eine Verbindungsstange (18) mit dem jeweiligen Kolben (13) verbunden ist,
- wobei der genannte Block (11) durch eine Kupplung mit einer Antriebswelle des Fahrzeugs verbunden ist, wobei die genannte Kupplung angetrieben wird, wenn eine Bremse angewendet wird, so dass der genannte Block mit all den Elementen rotiert, während die Kupplung (14) ortsfest an der Struktur befestigt bleibt,
- so dass jeder exzentrische Stift (15) entlang der Nut des jeweiligen Innenarms (a) verrutscht, was ein Kippen des jeweiligen Schwenkhebels (16) auf seiner welle (17) verursacht, wobei diese winkelbewegung dann durch den jeweiligen Außenarm (b) und die Verbindungsstange (18) zu einer linearen Bewegung des jeweiligen Kolbens (13) übertragen wird,
**dadurch gekennzeichnet, dass**
- die Kupplung (14) und die Innenarme (a) der Schwenkhebel (16) in einer abgedichteten zentralkammer gelegen sind und
- jeder Außenarm (b) des Schwenkhebels (16), und die jeweilige Verbindungsstange (18) und Kolben (13) in einer anderen Kammer individuell durch die Welle (17) des Schwenkhebels (16) getrennt gelegen sind, wobei die individuelle Schmierung jeder genannten anderen Kammer gewährleistet wird,
- wobei während des Vorwärtshubs des Kolbens (13) Luft von dem Hinterteil jedes Zylinders (12) durch ein Sperrventil (123) gesaugt wird, und während des Rückwärtshubs des Kolbens (13) Luft durch einen Kanal (124) in den Verdichtungsraum des Zylinders injiziert wird, wobei die genannte Verdiehtungskammer mit einem Lufteinlass verbunden wird,
- wobei die Druckluft von der verdichtungskammer durch einen Lufteinlass (121) durch eine Welle des Verdichters und eine rotierende Dichtung (19) gesendet wird, so dass sie in einem geeigneten Behälter gespeichert wird.

2. Mechanismus zur Rückgewinnung von Energie in selbstangetriebenen Fahrzeugen nach Anspruch 1, **dadurch gekennzeichnet, dass** der Kolben jedes Zylinders durch mit der gleichen Gradzahl wie die Zylinder winkelig verschobene Stiften betrieben wird, wodurch eine gleichmäßige Verteilung aller Massen während der Rotation der Anordnung beibehalten wird, und der Block mit der Antriebswelle des Fahrzeugs durch die Kupplung verbunden ist, wenn die Bremse angewendet wird.

## Revendications

1. Mécanisme pour la récupération d'énergie dans des véhicules autopropulsés formé par:
- un compresseur rotatif équilibré avec des pistons tangentiels (13),
- un bloc (11) qui à son tour est formé par deux ou plusieurs cylindres (12), dans chacun d'entre eux un piston (13) peut être déplacé et actionné par un levier de pivot (16),
- chaque levier de pivot (16) ayant un bras intérieur (a) et un bras extérieur (b) qui pivotent autour d'un arbre (17),
- chaque bras intérieur (a) est pourvu d'une rainure dans laquelle est disposée de manière glissante une broche excentrique (15) d'une manivelle (14),
- chaque bras extérieur (b) est connecté par une bielle (19) au piston respectif (13),
- ledit bloc (11) peut être connecté à travers un embrayage à un arbre de transmission du véhicule, ce qui fait que ledit embrayage est actionné lorsque l'on applique un frein de manière à ce que ledit bloc avec tous les éléments tourne tandis que la manivelle (14) demeure stationnaire fixée à la structure,
- de cette manière chaque broche excentrique (15) glisse le long de la rainure du bras intérieur (a) respectif en causant une inclinaison du levier de pivot (16) respectif sur son arbre (17) dont le mouvement angulaire est alors transmis par le bras extérieur (b) respectif et la bielle (18) à un mouvement linéaire du piston respectif (13),
**caractérisé en ce que**
- la manivelle (14) et les bras intérieurs (a) des leviers de pivot (16) sont situés dans une chambre centrale étanche et
- chaque bras extérieur (b) du levier de pivot (16), et la bielle (18) et le piston (13) respectifs sont situés dans une autre chambre, individuellement séparée par l'arbre (17) du levier de pivot (16), en facilitant la lubrification individuelle de ladite chaque autre chambre,
- de cette façon pendant la course en avant du piston (13) l'air est chassé de la partie arrière de chaque cylindre (12) à travers un clapet anti-retour (123) et pendant la course en retour du piston (13) l'air est injecté à travers un conduit (124) dans la chambre de compression du cylindre en accouplant ladite chambre de compression à une entrée d'air,
- l'air comprimé est envoyé de la chambre de compression par une sortie d'air (121) à travers un arbre du compresseur et un joint rotatif (19) de façon à être stocké dans un conteneur approprié.

2. Mécanisme pour la récupération d'énergie dans des véhicules autopropulsés selon la revendication 1, **caractérisé en ce que** le piston de chaque cylindre est actionné par des broches angulairement déplacées le même nombre de degrés que les cylindres, par conséquent une distribution homogène de toutes les masses se maintient pendant la rotation de l'ensemble, et le bloc est connecté à l'arbre de transmission du véhicule au moyen de l'embrayage lorsque l'on applique le frein.
